# EUROPEAN PATENT APPLICATION

(11) **EP 3 913 406 A1**
(43) Date of publication of application: **24.11.2021**
(21) Application number: 21165927.1
(22) Date of filing: 30.03.2021
(51) Int. Cl.: G02B 1/04

(54) **POLYMERIZABLE COMPOSITION FOR OPTICAL MATERIALS AND METHOD FOR PRODUCING THE SAME, METHOD FOR PRODUCING TRANSPARENT RESIN, AND METHOD FOR PRODUCING LENS BASE MATERIAL**

(30) Priority: 13.04.2020 JP 2020071554
(71) Applicant: Hoya Lens Thailand Ltd., Pathumthani 12130 (TH)
(72) Inventor: Igari, Masahito, Tokyo, Shinjuku-ku 1608347 (JP); Arai, Yuko, Tokyo, Shinjuku-ku 1608347 (JP); Nagasawa, Takumi, Tokyo, Shinjuku-ku 1608347 (JP)
(74) Representative: Beckmann, Claus

(57) **Abstract**

The present invention provides a polymerizable composition for optical materials with which a thiourethane-based optical material with suppressed coloration can be prepared stably with good reproducibility even though a polyene compound and an aromatic polyisocyanate are used, a method for producing the same, and the like. A method for producing a polymerizable composition for optical materials, the polymerizable composition comprising an aromatic polyisocyanate, a polyene compound having two or more ethylenically unsaturated double bonds and having a halogen concentration of 1 ppm or more and less than 150 ppm, and a polythiol.

## Description

### BACKGROUND OF THE INVENTION

### Field of the Invention

The present invention relates to a polymerizable composition for optical materials and a method for producing the same, a method for producing a transparent resin, a method for producing a lens base material, and the like.

### Description of the Related Art

Conventionally, it has been known that plastic lenses with a high refractive index can be obtained by allowing polyisocyanate compounds to react with polythiol compounds. These types of plastic materials are rapidly becoming popular for optical elements such as spectacle lenses and camera lenses because they are lighter and less fragile compared to inorganic lenses.

For example, Japanese Patent Laid-Open No. 60-199016 discloses a method for producing a polyurethane-based plastic lens with a high refractive index by heating a composition obtained by mixing an aliphatic polyisocyanate compound with an aliphatic polythiol compound such as pentaerythritol tetrakis-(thioglycolate) and trimethylolpropane tris-(thioglycolate).

In addition, Japanese Patent Laid-Open No. 63-046213 discloses a method in which a tetrafunctional polythiol compound such as pentaerythritol tetrakis(thioglycolate) and pentaerythritol tetrakis(mercaptopropionate) is used together with a bifunctional polythiol compound having thiol groups in order to increase the degree of crosslinking of the resin (see Japanese Patent Laid-Open No. 63-046213).

Furthermore, Japanese Patent Laid-Open No. 63-265922 discloses that cured products obtained by curing polymerizable compositions comprising particular polyolefin compounds and polythiol compounds have been widely used as various optical members such as lenses (see, for example, Japanese Patent Laid-Open No. 63-265922).

In order to obtain thiourethane-based transparent resins or lens base materials with higher optical characteristics, the use of an aromatic polyisocyanate as a high refractive index monomer together with a polyene compound having two or more ethylenically unsaturated double bonds has been investigated. However, when they are used in combination, a polymerizable composition for optical materials that is colored yellow, for example, may be unintentionally obtained, and the transparent resin, lens base material, and the like obtained using this composition are also colored.

The present invention has been made in consideration of the above problems. That is, one aspect of the present invention is to provide a polymerizable composition for optical materials with which a thiourethane-based optical material with suppressed coloration can be prepared stably with good reproducibility even though a polyene compound and an aromatic polyisocyanate are used, a method for producing the same, and the like.

In addition, another aspect of the present invention is to provide a method for producing a transparent resin and a method for producing a lens base material, in which a thiourethane-based transparent resin or lens base material with suppressed coloration can be produced stably with good reproducibility, and the like.

### SUMMARY OF THE INVENTION

As a result of diligent investigations focusing on the mixing conditions during preparation of a polymerizable composition for optical materials containing an aromatic polyisocyanate, a polyene compound, and a polythiol in order to solve the above problems, the present inventors have found a composition with which a polymerizable composition for thiourethane-based optical materials with suppressed coloration can be obtained stably with good reproducibility, thereby leading to the completion of the present invention.
[1] A polymerizable composition for optical materials, comprising an aromatic polyisocyanate, a polyene compound having two or more ethylenically unsaturated double bonds and having a halogen concentration of 1 ppm or more and less than 150 ppm, and a polythiol.
[2] The polymerizable composition for optical materials according to [1], wherein the polyene compound comprises one or more selected from the group consisting of triallyl isocyanurate and triallyl cyanurate.
[3] The polymerizable composition for optical materials according to [1] or [2], wherein the aromatic polyisocyanate comprises one or more selected from the group consisting of tolylene diisocyanate, diphenylmethane diisocyanate, phenylene diisocyanate, and naphthalene diisocyanate.
[4] The polymerizable composition for optical materials according to any one of [1] to [3], wherein the polythiol comprises one or more selected from the group consisting of bis(mercaptoethyl) sulfide, trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 4-mercaptomethyl-3,6-dithiaoctane-1,8-dithiol, bis(mercaptomethyl)-3,6,9-trithiaundecane-1,11-dithiol, and 2,5-dimercaptomethyl-1,4-dithiane.
[5] The polymerizable composition for optical materials according to any one of [1] to [4], wherein the polyene compound has a halogen concentration of 1 ppm or more and less than 100 ppm.
[6] The polymerizable composition for optical materials according to any one of [1] to [5], wherein the aromatic polyisocyanate has a halogen concentration of less than 30 ppm.
[7] The polymerizable composition for optical materials according to any one of [1] to [6], wherein the polythiol has a halogen concentration of less than 30 ppm.
[8] The polymerizable composition for optical materials according to any one of [1] to [7], wherein the halogen concentration is a chlorine concentration.
[9] The polymerizable composition for optical materials according to any one of [1] to [8], further comprising a polymerization catalyst.
[10] The polymerizable composition for optical materials according to any one of [1] to [9], further comprising a mold release agent.
[11] A method for producing a polymerizable composition for optical materials, comprising: a step of providing an aromatic polyisocyanate, a polyene compound having two or more ethylenically unsaturated double bonds and having a halogen concentration of 1 ppm or more and less than 150 ppm, and a polythiol; and a step of mixing the aromatic polyisocyanate, the polyene compound, and the polythiol.
[12] A method for producing a transparent resin, comprising: a step of providing an aromatic polyisocyanate, a polyene compound having two or more ethylenically unsaturated double bonds and having a halogen concentration of 1 ppm or more and less than 150 ppm, and a polythiol; a step of mixing the aromatic polyisocyanate, the polyene compound, and the polythiol to obtain a polymerizable composition for optical materials; and a step of polymerizing the polymerizable composition for optical materials to obtain a thiourethane-based transparent resin.
[13] A method for producing a lens base material, comprising: a step of providing an aromatic polyisocyanate, a polyene compound having two or more ethylenically unsaturated double bonds and having a halogen concentration of 1 ppm or more and less than 150 ppm, and a polythiol; a step of mixing the aromatic polyisocyanate, the polyene compound, and the polythiol to obtain a polymerizable composition for optical materials; and a step of subjecting the polymerizable composition for optical materials to cast polymerization to obtain a thiourethane-based lens base material.

Here, it is preferable for the above production method of [11], the above production method of [12], and the production method of [13] to further have the technical features described in any one of the above [2] to [10].

### Advantageous Effects of Invention

According to one aspect of the present disclosure, a polymerizable composition for optical materials with which a thiourethane-based optical material with suppressed coloration can be prepared stably with good reproducibility, and a method for producing the same can be provided, and as a result, a thiourethane-based transparent resin or lens base material with suppressed coloration can be produced stably with good reproducibility.

### DETAILED DESCRIPTION OF THE PREFERRED EMBODIMENTS

Hereinafter, an embodiment of the present disclosure (hereinafter, referred to as a "present embodiment") will be described in detail, but the present invention is not limited thereto, and a variety of variations are possible within the range not departing from the gist thereof. Note that, in the present specification, the notation of the numerical range "1 to 100", for example, shall include both the lower limit value of "1" and the upper limit value of "100". The same also applies to the notation of other numerical ranges.

### [Polymerizable composition for optical materials and method for producing the same]

A polymerizable composition for optical materials of the present embodiment at least contains an aromatic polyisocyanate, a polyene compound having two or more ethylenically unsaturated double bonds and having a halogen concentration of 1 ppm or more and less than 150 ppm, and a polythiol. The polymerizable composition for optical materials of the present embodiment can be produced through, for example, a step of providing an aromatic polyisocyanate, a polyene compound, and a polythiol (provision step S1), and a step of mixing the aromatic polyisocyanate, the polyene compound, and the polythiol (mixing step S2).

According to the findings of the present inventors, it is thought that, if a halogen is present when the above three components are mixed and their halogen concentration is excessively high, for example, a reaction occurs between the halogen compound contained in the polyene compound and the aromatic amine derivatized from the aromatic isocyanate, and the bond generated by this reaction extends the conjugation length of the aromatic polyisocyanate and can make the conjugation length capable of absorbing the visible light region, thus making it easier to obtain a colored polymerizable composition for optical materials. In contrast, since the present embodiment contains an aromatic polyisocyanate, a polyene compound having a halogen concentration of 1 ppm or more and less than 150 ppm, and a polythiol, the above-mentioned reaction between the polyene compound and the aromatic polyisocyanate is less likely to occur, and the coloration caused by the above-mentioned extension of the conjugation length of the aromatic polyisocyanate is less likely to occur. As a result, it is thought that, in the present embodiment, the coloration of the resulting polymerizable composition for optical materials of a thiourethane-based resin is suppressed. However, the action of the present embodiment is not limited to the above conjectures. Note that, in the present invention and the present specification, the term "thiourethane-based resin" means a resin having thiourethane bonds. Also, in the present invention and the present specification, the term "halogen" means fluorine (F), chlorine (Cl), bromine (Br), and iodine (I), and the term "halogen concentration" means the concentration of these halogen atoms. In one aspect, the halogen is chlorine (Cl), and the halogen concentration is the chlorine (Cl) concentration. Hereinafter, each configuration will be described in detail.

### <Provision step S1>

In this provision step S1, an aromatic polyisocyanate, a polyene compound having two or more ethylenically unsaturated double bonds, and a polythiol are provided. Note that, some of the compounds that can be used as components of the polymerizable composition for optical materials have two or more isomers. For such compounds, a mixture of two or more isomers may be used, or one of the two or more isomers may be used alone.

### (Aromatic polyisocyanate)

The aromatic polyisocyanate is a polyfunctional isocyanate having one or more aromatic rings and two or more isocyanate groups (-NCO) in one molecule. For the aromatic polyisocyanate, any of the publicly known ones can be used without particular restrictions, as long as they can be used for fabricating transparent resins, lens base materials, and the like.

Specific examples of the aromatic polyisocyanate include, but are not particularly limited to, the following:
aromatic polyisocyanates such as 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenylisocyanate), 4,4'-methylenebis(2-methylphenylisocyanate), bibenzyl-4,4'-diisocyanate, and bis(isocyanatophenyl)ethylene;
polyisocyanates having an aromatic compound such as xylylene diisocyanate, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalin, and bis(isocyanatomethylphenyl) ether;
aromatic sulfide-based polyisocyanates such as 2-isocyanatophenyl-4-isocyanatophenyl sulfide, bis(4-isocyanatophenyl) sulfide, and bis(4-isocyanatomethylphenyl) sulfide; and
aromatic disulfide-based isocyanates such as bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methoxy-4-isocyanatophenyl) disulfide, and bis(4-methoxy-3-isocyanatophenyl) disulfide. These aromatic polyisocyanates may be used alone as one kind, or may be used in an arbitrary combination of two or more kinds.

Among aromatic polyisocyanates, from the viewpoints of heat resistance and transparency of the resulting cured product, as well as ease of availability of materials and cost, tolylene diisocyanate (TDI), diphenylmethane diisocyanate (MDI), phenylene diisocyanate (PDI), and naphthalene diisocyanate (NDI) are preferable. Tolylene diisocyanate (TDI) and diphenylmethane diisocyanate (MDI) are more preferable, and tolylene diisocyanate (TDI) is still more preferable.

Note that, as the aromatic polyisocyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

Here, the above aromatic polyisocyanate is preferably an aromatic polyisocyanate having a halogen concentration of less than 30 ppm, more preferably a halogen concentration of less than 20 ppm, still more preferably a halogen concentration of less than 10 ppm, particularly preferably a halogen concentration of less than 5 ppm, and most preferably a halogen concentration of less than 3 ppm, from the viewpoint of suppressing coloration by suppressing a rise in the halogen concentration during the mixing step S2. The lower limit of the halogen concentration is, of course, 0 ppm or more. As such an aromatic polyisocyanate having a low halogen concentration, for example, an aromatic polyisocyanate containing no halogen (halogen-free) or an aromatic polyisocyanate having a halogen concentration within the above preferred range may be used. In addition, a low halogen concentration can also be achieved by dehalogenation through, for example, distillation and purification.

### (Polyene compound having two or more ethylenically unsaturated double bonds)

In the present invention and the present specification, the term "polyene compound" refers to a compound having two or more ethylenically unsaturated double bonds, that is, carbon-carbon double bonds in one molecule (hereinafter, this may be simply referred to as a "polyene compound") that can be polymerized with the polythiol. The cured product of a polymerizable composition containing a polyene compound and a polythiol compound has bonds formed by the reaction (hereinafter, described as a "thiol-ene reaction") between the carbon-carbon double bonds that the polyene compound has and the thiol groups that the polythiol compound has. And, the cured product obtained by curing a polymerizable compound in which an aromatic polyisocyanate is further added to the polymerizable composition containing a polyene compound and a polythiol compound also has, in addition to thiourethane bonds obtained by the reaction between the aromatic polyisocyanate compound and the polythiol compound, bonds obtained by the thiol-ene reaction. For the polyene compound, any of the publicly known ones can be used without particular restrictions, as long as they can be used for fabricating transparent resins, lens base materials, and the like.

The number of ethylenically unsaturated double bonds that the polyene compound has may be two or more, preferably three or more, and can be, for example, three to five in one molecule. Examples of the ethylenically unsaturated double bonds of the polyene compound include, but are not particularly limited to, (meth)acrylic groups, vinyl groups, and allyl groups. The types of multiple ethylenically unsaturated double bonds included in the polyene compound may be the same as or different from each other.

Specific examples of the polyene compound include, but are not particularly limited to, vinyl compounds such as divinylbenzene and divinyltoluene; (meth)acrylates such as ethylene glycol di(meth)acrylate, diethylene glycol di(meth)acrylate, triethylene glycol di(meth)acrylate, trimethylolpropane tri(meth)acrylate, trimethylolpropane di(meth)acrylate, pentaerythritol tri(meth)acrylate, pentaerythritol tetra(meth)acrylate, tetraethylene glycol di(meth)acrylate, and isocyanuric acid ethylene oxide-modified tri(meth)acrylate; allyl compounds such as diallyl phthalate, diallyl maleate, triallyl cyanurate, triallyl isocyanurate, triallyl trimellitate, and tetraallyloxyethane; and the like.

The polyene compound can be, for example, an aliphatic compound, an alicyclic compound, an aromatic compound, a heterocyclic compound, or the like. In one aspect, the polyene compound can be a cyclic structure-containing compound. The cyclic structure-containing compound may be a carbocyclic compound or a heterocyclic compound, and may be a monocyclic compound or a bicyclic or higher, polycyclic compound. In addition, the polyene compound may include a plurality of cyclic structures. In one aspect, the polyene compound can be a heteroalicyclic compound or a heteroaromatic compound, and specifically can be an isocyanuric ring-containing compound or a cyanuric ring-containing compound. Among the above, as the polyene compound, from the viewpoints of the optical characteristics and the like of the transparent resin, lens base material, and the like obtained by using this, triallyl isocyanurate (TAIC) and triallyl cyanurate are preferable, and triallyl isocyanurate (TAIC) is still more preferable. However, in the case of using triallyl isocyanurate or triallyl cyanurate as the polyene compound, if they contain a halogen compound, a reaction between this halogen compound and the aromatic amine derivatized from the aromatic isocyanate may occur, thereby promoting coloration. Therefore, when using triallyl isocyanurate or triallyl cyanurate as the polyene compound, it is particularly desirable to remove or reduce the halogen compound or use a compound having a small content proportion of halogen compound.

Here, the above polyene compound is preferably a polyene compound having a halogen concentration of less than 150 ppm, more preferably a halogen concentration of less than 100 ppm, still more preferably a halogen concentration of less than 50 ppm, particularly preferably a halogen concentration of less than 30 ppm, and most preferably a halogen concentration of less than 10 ppm, from the viewpoint of reducing the above-mentioned content proportion of halogen compound. The lower limit of the halogen concentration is, of course, 0 ppm or more. As such a polyene compound having a low halogen concentration, for example, a polyene compound containing no halogen (halogen-free) or a polyene compound having a halogen concentration within the above preferred range may be used. In addition, a low halogen concentration can also be achieved by dehalogenation through, for example, distillation and purification. In the case of using, for example, triallyl isocyanurate (TAIC) or triallyl cyanurate as the polyene compound, if they have a high halogen concentration, the above-mentioned content proportion of halogen compound tends to be high, and therefore, in one aspect, what is to be used preferably has a halogen concentration of 1 ppm or more and less than 150 ppm, more preferably a halogen concentration of 1 ppm or more and less than 100 ppm, still more preferably a halogen concentration of 1 ppm or more and less than 50 ppm, and particularly preferably a halogen concentration of 1 ppm or more and less than 30 ppm.

### (Polythiol)

The polythiol is a polyfunctional thiol having two or more mercapto groups (-SH) in one molecule. For the polythiol, any of the publicly known ones can be used without particular restrictions, as long as they can be used for fabricating transparent resins, lens base materials, and the like.

Specific examples of the polythiol include the following:
aliphatic polythiols such as 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), and 1,2-bis(2-mercaptoethylthio)-3-mercaptopropane;
aromatic polythiols such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane;
halogen substituted aromatic polythiols including chlorine substituted products and bromine substituted products such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene;
aromatic polythiols containing a sulfur atom other than thiol groups (which may also be referred to as "mercapto groups"), such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, and 1,2,4,5-tetrakis(mercaptoethylthio)benzene, and nucleus alkylated products thereof;
aliphatic polythiols containing a sulfur atom other than thiol groups, such as bis(mercaptomethyl) sulfide, bis(mercaptoethyl) sulfide, bis(mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio) propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, 2,5-dimercapto-1,4-dithiane, bis(mercaptomethyl) disulfide, bis(mercaptoethyl) disulfide, and bis(mercaptopropyl) disulfide, and thioglycolic acid and mercaptopropionic acid esters thereof, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(1,3-dimercapto-2-propyl) sulfide, and bis(mercaptomethyl)-3,6,9-trithiaundecane-1,11-dithiol (which may also be referred to as "bis(mercaptomethyl)-3,6,9-trithia-1,11-undecanedithiol"; one isomer selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, or a mixture of two or three of these isomers); and
heterocycle-containing polythiols containing a sulfur atom other than thiol groups, such as 3,4-thiophenedithiol, tetrahydrothiophene-2,5-dimercaptomethyl, 2,5-dimercapto-1,3,4-thiadiazole, 2,5-dimercapto-1,4-dithiane, and 2,5-dimercaptomethyl-1,4-dithiane. These polythiols may be used alone as one kind, or may be used in an arbitrary combination of two or more kinds.

In one aspect, the polythiol can be an aliphatic compound. Also, in one aspect, the above polythiol can be an ester bond-containing compound. For example, the ester bond-containing polythiol can include two or more, for example, two to five ester bonds in one molecule. In one aspect, the above polythiol can be an ester bond-containing aliphatic compound. Among polythiols, from the viewpoint of increasing the polymerization density (crosslinking density), polythiols having two mercapto groups in one molecule, polythiols having three mercapto groups in one molecule, polythiols having four mercapto groups in one molecule, and polythiols having five mercapto groups in one molecule are preferable, and polythiols having three mercapto groups in one molecule, polythiols having four mercapto groups in one molecule, and polythiols having five mercapto groups in one molecule are more preferable. In addition, specifically, the polythiol is preferably bis(mercaptoethyl) sulfide, trimethylolpropane tris(2-mercaptoacetate), trimethylolpropane tris(3-mercaptopropionate), pentaerythritol tetrakis(2-mercaptoacetate) (PETMA), pentaerythritol tetrakis(3-mercaptopropionate) (PETMP), 4-mercaptomethyl-3,6-dithiaoctane-1,8-dithiol, bis(mercaptomethyl)-3,6,9-trithiaundecane-1,11-dithiol, and 2,5-dimercaptomethyl-1,4-dithiane, and more preferably pentaerythritol tetrakis(2-mercaptoacetate) (PETMA), 4-mercaptomethyl-3,6-dithiaoctane-1,8-dithiol, and bis(mercaptomethyl)-3,6,9-trithiaundecane-1,11-dithiol.

Here, the above polythiol is preferably a polythiol having a halogen concentration of less than 30 ppm, more preferably a halogen concentration of less than 20 ppm, still more preferably a halogen concentration of less than 10 ppm, particularly preferably a halogen concentration of less than 5 ppm, and most preferably a halogen concentration of less than 3 ppm, from the viewpoint of suppressing a rise in the halogen concentration during the mixing step S2. The lower limit of the halogen concentration is, of course, 0 ppm or more. As such a polythiol having a low halogen concentration, for example, a polythiol containing no halogen (halogen-free) or a polythiol having a halogen concentration within the above preferred range may be used. In addition, a low halogen concentration can also be achieved by dehalogenation through, for example, distillation and purification.

### (Additional polyiso(thio)cyanate)

In the method for producing a polymerizable composition for optical materials of the present embodiment, only the above aromatic polyisocyanate may be used as the polyisocyanate component, but a polyiso(thio)cyanate other than the above-mentioned aromatic polyisocyanate (hereinafter, this may be simply referred to as an "additional polyiso(thio)cyanate") may be further used to the extent that the effects of the present invention are not impaired.

In the present invention and the present specification, the term "polyiso(thio)cyanate" refers to a compound having two or more iso(thio)cyanate groups in one molecule. The term "iso(thio)cyanate" means isocyanate and/or isothiocyanate. Isocyanate may also be referred to as isocyanato, and isothiocyanate may also be referred to as isothiocyanato. The cured product of a polymerizable composition for optical materials containing a polyiso(thio)cyanate and a polythiol can have thiourethane bonds formed by the reaction (thiourethanization reaction) between the iso(thio)cyanate groups that the polyiso(thio)cyanate has and the thiol groups that the polythiol has.

The additional polyiso(thio)cyanate can be a linear or branched, or alicyclic aliphatic polyiso(thio)cyanate, a heterocyclic polyiso(thio)cyanate, or the like. The number of iso(thio)cyanate groups that the additional polyiso(thio)cyanate has is two or more, preferably two to four, and more preferably two or three in one molecule.

Specific examples of the additional polyiso(thio)cyanate include, but are not particularly limited to, linear or branched aliphatic polyisocyanates such as hexamethylene diisocyanate, 1,5-pentane diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate; aliphatic polyisothiocyanates such as 1,2-diisothiocyanatoethane and 1,6- diisothiocyanatohexane; alicyclic polyisocyanates such as bis(4-isocyanatocyclohexyl)methane, 1,3-bis(isocyanatomethyl)cyclohexane, 1,4-bis(isocyanatomethyl)cyclohexane, diisocyanatocyclohexane, isophorone diisocyanate, bis(isocyanatomethyl)cyclohexane, dicyclohexylmethane diisocyanate, 2,5-bis(isocyanatomethyl)-bicyclo[2.2.1]heptane, and 2,6-bis(isocyanatomethyl)-bicyclo[2.2.1]heptane; and the like. These additional polyiso(thio)cyanates may be used alone as one kind, or may be used in an arbitrary combination of two or more kinds.

Moreover, as the additional polyiso(thio)cyanate, the following can also be used: sulfur-containing aliphatic polyisocyanates such as bis(isocyanatomethyl) sulfide, bis(isocyanatoethyl) sulfide, bis(isocyanatopropyl) sulfide, bis(isocyanatohexyl) sulfide, bis(isocyanatomethyl)sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptanetetraisocyanate, 2,6-diisocyanatomethyl-3,5-dithia-1,7-heptane diisocyanate, 2,5-diisocyanatomethylthiophene, and 4-isocyanatoethylthio-2,6-dithia-1,8-octane diisocyanate; alicyclic polyisothiocyanates such as cyclohexane diisothiocyanate; sulfur-containing aliphatic iso(thio)cyanates such as thiobis(3-isothiocyanatopropane), thiobis(2-isothiocyanatoethane), and dithiobis(2-isothiocyanatoethane); sulfur-containing alicyclic polyisocyanates such as isocyanatomethyl-2-methyl-1,3-dithiolane; sulfur-containing alicyclic compounds such as 2,5-diisothiocyanatothiophene, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane; compounds having an isocyanato group and an isothiocyanato group such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanatol,3,5-triazine, 4-isocyanatophenyl-4-isothiocyanatophenyl sulfide, and 2-isocyanatoethyl-2-isothiocyanatoethyl disulfide; and the like. These additional polyiso(thio)cyanates may be used alone as one kind, or may be used in an arbitrary combination of two or more kinds.

Among these additional polyiso(thio)cyanates, aliphatic polyisocyanates are preferable. Dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate are preferable, and dicyclohexylmethane diisocyanate, bis(isocyanatomethyl)cyclohexane, and hexamethylene diisocyanate are more preferable.

Note that, as the above-mentioned additional polyiso(thio)cyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

Here, in the case of using the above additional polyiso(thio)cyanate, it is preferably an additional polyiso(thio)cyanate having a halogen concentration of less than 30 ppm, more preferably a halogen concentration of less than 20 ppm, still more preferably a halogen concentration of less than 10 ppm, particularly preferably a halogen concentration of less than 5 ppm, and most preferably a halogen concentration of less than 3 ppm, from the viewpoint of suppressing a rise in the halogen concentration during the mixing step S2. The lower limit of the halogen concentration is, of course, 0 ppm or more. As such an additional polyiso(thio)cyanate having a low halogen concentration, for example, an additional polyiso(thio)cyanate containing no halogen (halogen-free) or an additional polyiso(thio)cyanate having a halogen concentration within the above preferred range may be used. In addition, a low halogen concentration can also be achieved by dehalogenation through, for example, distillation and purification.

Suitable examples of the combination of the aromatic polyisocyanate, the polyene compound having two or more ethylenically unsaturated double bonds, and the polythiol include:
(1) a combination of tolylene diisocyanate, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol;
(2) a combination of diphenylmethane diisocyanate, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol;
(3) a combination of tolylene diisocyanate, one or more aliphatic polyisocyanates, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol; and
(4) a combination of diphenylmethane diisocyanate, one or more aliphatic polyisocyanates, triallyl isocyanurate and/or triallyl cyanurate, and one or more selected from the group consisting of pentaerythritol tetrakis(2-mercaptoacetate), pentaerythritol tetrakis(3-mercaptopropionate), 4-mercaptomethyl-3,6-dithiaoctane-1,8-dithiol, and bis(mercaptomethyl)-3,6,9-trithiaundecane-1,11-dithiol.

The amount of aromatic polyisocyanate to be used can be set as appropriate depending on the desired performance and is not particularly limited, but it is preferably 1 to 50% by mass in total, more preferably 3 to 45% by mass in total, and still more preferably 5 to 40% by mass in total, relative to the total solid content of the polymerizable composition for optical materials. Note that, in the case where no polyiso(thio)cyanate such as aliphatic polyisocyanates is used in combination, the amount of aromatic polyisocyanate to be used is preferably 10 to 40% by mass in total, more preferably 10 to 35% by mass in total, and still more preferably 15 to 30% by mass in total, relative to the total solid content of the polymerizable composition for optical materials.

Alternatively, in the case where one or more aliphatic polyisocyanates are used in combination, the amount of aromatic polyisocyanate and aliphatic polyisocyanates to be used can be set as appropriate depending on the desired performance and is not particularly limited, but it is preferably 10 to 40% by mass in total, more preferably 10 to 35% by mass in total, and still more preferably 15 to 30% by mass in total, relative to the total solid content of the polymerizable composition for optical materials. At this time, although the proportion between aromatic polyisocyanate and aliphatic polyisocyanate to be used is not particularly limited, it is preferably 1:9 to 9:1, more preferably 2:8 to 8:2, and still more preferably 3:7 to 7:3.

Furthermore, the amount of polyene compound having two or more ethylenically unsaturated double bonds to be used can be set as appropriate depending on the desired performance and is not particularly limited, but it is preferably 3 to 40% by mass in total, more preferably 5 to 35% by mass in total, and still more preferably 10 to 30% by mass in total, relative to the total solid content of the polymerizable composition for optical materials.

Meanwhile, the amount of polythiol to be used can be set as appropriate depending on the desired performance and is not particularly limited, but it is preferably 30 to 80% by mass in total, more preferably 35 to 75% by mass in total, and still more preferably 40 to 70% by mass in total, relative to the total solid content of the polymerizable composition for optical materials.

Here, the polymerizable composition for optical materials of the present embodiment contains mercapto groups, isocyanate groups, and ethylenically unsaturated double bonds derived from the aromatic polyisocyanate, the polythiol, and furthermore, an optional component such as polyiso(thio)cyanate. At this time, the mercapto group/(isocyanate group + ethylenically unsaturated double bond) equivalent ratio of the polymerizable composition for optical materials of the present embodiment is preferably 0.90 to 1.70, more preferably 0.94 to 1.20, still more preferably 0.96 to 1.09, and particularly preferably 0.98 to 1.05.

Note that, the -SH/ethylenically unsaturated double bond equivalent ratio of the polymerizable composition for optical materials of the present embodiment may be set as appropriate depending on the desired performance in consideration of the types and compounding proportion of the aromatic polyisocyanate, polythiol, and polyiso(thio)cyanate to be used, and is not particularly limited. However, it is preferably 1.20 to 15.00, more preferably 1.40 to 10.00, and still more preferably 1.50 to 5.00.

Also, the -SH/-NCO equivalent ratio of the polymerizable composition for optical materials of the present embodiment may be set as appropriate depending on the desired performance in consideration of the types and compounding proportion of the aromatic polyisocyanate, polythiol, and polyiso(thio)cyanate to be used, and is not particularly limited. However, it is preferably 1.20 to 15.00, more preferably 1.40 to 10.00, still more preferably 1.50 to 5.00.

### (Other components)

In addition to the above-mentioned essential components, the aromatic polyisocyanate, the polyene compound having two or more ethylenically unsaturated double bonds, and the polythiol, and furthermore, an optional component, polyiso(thio)cyanate, the polymerizable composition for optical materials of the present embodiment may contain various additive agents publicly known in the art as necessary. Examples of the additive agents include, but are not particularly limited to, ultraviolet absorbers, polymerization catalysts, mold release agents, antioxidants, coloration inhibitors, fluorescent brightening agents, bluing agents, chain extenders, crosslinking agents, photostabilizers, oil-soluble dyes, and fillers. By mixing the above additive agents by normal methods, the desired curable composition can be obtained. The amount of additive agents to be used can be set as appropriate.

### (Ultraviolet absorber)

The ultraviolet absorber preferably has a maximum absorption wavelength of 345 nm or more in the chloroform solution. As for the ultraviolet absorber, those publicly known in the art can be used, and their types are not particularly limited. Specific examples thereof include, but are not particularly limited to, benzophenone-based compounds such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone; benzotriazole-based compounds such as 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole; dibenzoylmethane, 4-tert-butyl-4'-methoxybenzoylmethane, and the like. These ultraviolet absorbers may be used alone as one kind, or may be used in an arbitrary combination of two or more kinds.

The amount of ultraviolet absorber to be added is preferably 0.01 parts by mass or more and 5 parts by mass or less, more preferably 0.05 parts by mass or more and 3 parts by mass or less, still more preferably 0.1 parts by mass or more and 2 parts by mass or less, particularly preferably 0.3 parts by mass or more and 2 parts by mass or less, even further preferably 0.5 parts by mass or more and 2 parts by mass or less, and most preferably 0.8 parts by mass or more and 2 parts by mass or less relative to 100 parts by mass of the total amount of resin components (that is, the aromatic polyisocyanate, the polyene compound having two or more ethylenically unsaturated double bonds, and the polythiol, and furthermore, an optional component, polyiso(thio)cyanate). Note that, in the present invention and the present specification, the mass of resin components refers to, when the polymerizable composition for optical materials contains a solvent, the mass of the polymerizable composition excluding that of the solvent.

### (Polymerization catalyst)

The polymerization catalyst may comprise a first polymerization catalyst that catalyzes the thiol-ene reaction between the polyene compound having two or more ethylenically unsaturated double bonds and the polythiol, and a second polymerization catalyst that catalyzes the thiourethanization reaction of the polythiol, the aromatic polyisocyanate, and furthermore, an optional component, polyiso(thio)cyanate. As for the first polymerization catalyst that catalyzes the thiol-ene reaction and the second polymerization catalyst that catalyzes the thiourethanization reaction, those publicly known in the art can be used, and their types are not particularly limited.

Examples of the first polymerization catalyst that catalyzes the thiol-ene reaction include, but are not particularly limited to, azobis-based compounds such as 2,2'-azobisisobutyronitrile, 2,2'-azobis(2-methylbutyronitrile), 2,2'-azobis-2,4-dimethylvaleronitrile, dimethyl-2,2'-azobisisobutyrate, 1,1'-azobis(cyclohexane-1-carbonitrile), 1,1'-azobis(1-acetoxy-1-phenylethane), and 2,2'-azobis(4-methoxy-2,4-dimethylvaleronitrile); peroxide-based compounds such as benzoyl peroxide, acetyl peroxide, tert-butyl peroxide, propionyl peroxide, lauroyl peroxide, tert-butyl peroxyacetate, tert-butyl peroxybenzoate, tert-butyl hydroperoxide, tert-butyl peroxypivalate, 1,1-bis(t-butylperoxy)-3,3,5-trimethylcyclohexane, t-butyl peroxy-2-ethylhexanoate, t-amyl peroxy-2-ethylhexanoate, t-amyl perisononanoate, t-amyl peroxyacetate, and t-amyl peroxybenzoate; and the like.

Examples of the second polymerization catalyst that catalyzes the thiourethanization reaction preferably include organotin compounds. Specific examples thereof include, but are not particularly limited to, alkyltin halide compounds such as dibutyltin dichloride, dimethyltin dichloride, monomethyltin trichloride, trimethyltin chloride, tributyltin chloride, tributyltin fluoride, and dimethyltin dibromide; and alkyltin compounds such as dibutyltin diacetate and dibutyltin dilaurate. These polymerization catalysts may be used alone as one kind, or may be used in an arbitrary combination of two or more kinds. Among the above, dibutyltin dichloride, dimethyltin dichloride, dibutyltin diacetate, and dibutyltin dilaurate are preferable.

The amount of first polymerization catalyst that catalyzes the thiol-ene reaction to be added is preferably 0.001 parts by mass or more and 0.10 parts by mass or less, more preferably 0.005 parts by mass or more and 0.08 parts by mass or less, and still more preferably 0.010 parts by mass or more and 0.06 parts by mass or less relative to 100 parts by mass of the total amount of resin components (that is, the aromatic polyisocyanate, the polyene compound having two or more ethylenically unsaturated double bonds, and the polythiol, and furthermore, an optional component, polyiso(thio)cyanate).

The amount of second polymerization catalyst that catalyzes the thiourethanization reaction to be added is preferably 0.001 parts by mass or more and 1 part by mass or less, more preferably 0.005 parts by mass or more and 0.5 parts by mass or less, and still more preferably 0.005 parts by mass or more and 0.1 parts by mass or less relative to 100 parts by mass of the total amount of resin components (that is, the aromatic polyisocyanate, the polyene compound having two or more ethylenically unsaturated double bonds, and the polythiol, and furthermore, an optional component, polyiso(thio)cyanate).

### (Mold release agent)

The mold release agent enhances the releasing properties from the molding mold. As for the mold release agent, those publicly known in the art can be used, and their types are not particularly limited. The mold release agent is preferably a phosphoric acid ester compound. Specific examples thereof include, but are not particularly limited to, isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propylphenyl acid phosphate, butylphenyl acid phosphate, and butoxyethyl acid phosphate. The phosphoric acid ester compound may be either phosphoric acid monoester compound or phosphoric acid diester compound, but a mixture of phosphoric acid monoester compound and phosphoric acid diester compound is preferable.

The amount of mold release agent to be added is preferably 0.01 parts by mass or more and 1.00 parts by mass or less, and more preferably 0.05 parts by mass or more and 0.50 parts by mass or less relative to 100 parts by mass of the total amount of resin components (that is, the aromatic polyisocyanate, the polyene compound having two or more ethylenically unsaturated double bonds, and the polythiol, and furthermore, an optional component, polyiso(thio)cyanate).

### <Mixing step S2>

The polymerizable composition for optical materials of the present embodiment can be prepared by mixing the polythiol, the polyene compound having two or more ethylenically unsaturated double bonds, the aromatic polyisocyanate, and as necessary, optional components, polyiso(thio)cyanate and various additive agents.

Note that the "halogen concentration" in the present invention and the present specification means the value measured by using an ion chromatography system (product name: ICS1600, Dionex Corporation) equipped with an electrical conductivity detector, taking 100 µL of specimen as the sample, and using a mobile phase (2.7 mmol/L: Na₂CO₃ and 0.3 mmol/L: NaHCO₃) under conditions with a flow rate of 1.5 mmol/L. Also, the sample used here was obtained by weighing the specimen, burning it in the combustion tube of an analyzing apparatus (product name: AQF-2100, GA-210, Mitsubishi Chemical Corporation, electric furnace temperature: 900°C (inlet) and 1000°C (outlet)), absorbing the generated gas in an absorption solution (H₂O₂ 0.0009%, internal standard P 2 µg/mL, absorption volume: 5 mL), and then collecting the sample from the absorption solution.

The method for preparing the polymerizable composition for optical materials is not particularly limited, and any method publicly known as a method for preparing a polymerizable composition can be employed as appropriate. For example, upon preparing the polymerizable composition for optical materials of the present embodiment, it may be prepared without adding any solvent, or may be prepared by adding an arbitrary amount of solvent. As the solvent, one or more of the solvents publicly known as solvents that can be used for polymerizable compositions can be used.

### [Transparent resin]

A transparent resin of the present embodiment can be obtained by polymerizing the above-mentioned polymerizable composition for optical materials. Since the transparent resin of the present embodiment is prepared by the above-mentioned method from the polymerizable composition for optical materials, as mentioned above, the coloration of the polymerizable composition for optical materials is suppressed, and therefore, the transparent resin obtained by polymerizing it also has suppressed coloration.

The method for producing the transparent resin of the present embodiment is not particularly limited, and any method publicly known as a method for producing a transparent resin can be employed as appropriate. In one aspect, the method for producing the transparent resin of the present embodiment comprises a step of polymerizing the above-mentioned polymerizable composition for optical materials.

The transparent resin obtained after the polymerization step has a comparatively high refractive index, and is lighter and less fragile compared to inorganic lenses, and it is easier to obtain ones having even better heat resistance, durability, and impact resistance. For this reason, the transparent resin of the present embodiment can be suitably used as various optical members. Examples of the optical members may include various lenses and optical elements such as spectacle lenses, telescope lenses, binocular lenses, microscope lenses, endoscope lenses, and imaging system lenses of various cameras, and more preferably, examples thereof include spectacle lenses. Note that the term "lens" in the present invention and the present specification shall include "lens base materials" in which one or more layers are laminated in an arbitrary manner. And, the term "for optical materials" in the present invention and the present specification is meant to include these optical members.

For example, in order to produce a cured product with a lens shape (also referred to as a "lens base material" or "plastic lens"), cast polymerization is preferable. In the cast polymerization, for example, the polymerizable composition for optical materials prepared as described above is injected into a cavity of a molding mold having two molds facing each other with a certain interval and a cavity formed by closing the above interval, from an inlet provided on the side of the molding mold after defoaming as necessary. By polymerizing the polymerizable composition for optical materials in this cavity, preferably by heating (curing reaction), a cured product can be obtained to which the internal shape of the cavity is transferred. For the molding mold, for example, a molding mold made of glass or metal is used. The polymerization conditions upon polymerizing the polymerizable composition for optical materials in the molding mold are not particularly limited, and can be set as appropriate depending on the composition and the like of the polymerizable composition for optical materials to be used. As one example, a molding mold in which the polymerizable composition for optical materials has been injected into the cavity can be subjected to heat treatment under conditions of preferably 0°C or higher and 150°C or lower, more preferably 10°C or higher and 130°C or lower, and for preferably 3 hours or longer and 50 hours or shorter, more preferably 5 hours or longer and 25 hours or shorter. However, the conditions are not limited to the above. Note that, in the present invention and the present specification, the temperature regarding cast polymerization, such as heating temperature, refers to the ambient temperature at which the molding mold is placed. Also, during heating, the temperature can be raised at an arbitrary temperature raising rate and can be lowered (cooled) at an arbitrary temperature lowering rate. After the polymerization (curing reaction) ends, the cured product inside the cavity is released from the molding mold. In order to make the transparent resin fabricated by polymerizing the polymerizable composition for optical materials have good release properties from the molding mold, a mold release agent may be applied to the mold release surface of the molding mold, or a mold release agent may be added to the polymerizable composition for optical materials.

The cured product that has been released from the molding mold can be used as an optical member after carrying out post treatment as necessary, and for example, it can be used as various lenses (for example, lens base materials). As one example, the cured product used as the lens base material for spectacle lenses can be normally subjected to, after being released from the mold, post processing such as annealing, dyeing treatment, grinding such as rounding, polishing, and processing for forming a coat layer such as a primer coat layer to improve impact resistance and a hard coat layer to increase surface hardness. Furthermore, various functional layers such as antireflection layers and water repellent layers can be formed on the lens base material. For any of these processing steps, publicly known technologies can be applied. For example, in the dyeing treatment, the lens base material can be dyed with any color such as blue, red, green, or yellow. The transparent resin (for example, lens base material) of the present embodiment has a high visual transmittance and exhibits excellent color development properties even when dyed with these colors. In this way, a spectacle lens in which the lens base material is the above cured product can be obtained. Furthermore, by attaching this spectacle lens to a frame, glasses can be obtained.

According to the present embodiment, since an aromatic polyisocyanate, a polyene compound having two or more ethylenically unsaturated double bonds and having a halogen concentration of 1 ppm or more and less than 150 ppm, and a polythiol are used, a polymerizable composition for thiourethane-based optical materials, transparent resin, lens base material, and the like with suppressed coloration can be obtained stably with good reproducibility.

### Examples

Hereinafter, the present embodiment will be described more specifically with reference to Examples and Comparative Examples, but the present invention is not restricted in any way to these Examples. The present invention can adopt a variety of conditions as long as they do not depart from the gist of the present invention and achieve the objects of the present invention. Note that the values of the various production conditions and evaluation results shown below have the meaning as the preferred upper limit value or preferred lower limit value in the implementation of the present invention, and the preferred range may be the range specified by the combination of the aforementioned upper limit or lower limit values and the values of the following Examples or the combination of the values among Examples. In addition, the operations and evaluations described below were performed under room temperature (about 20 to 25°C) in the atmosphere, unless otherwise noted. Also, % and part(s) described below are on the basis of mass unless otherwise noted.

### [Measurement methods and evaluation criteria]

The measurement conditions and evaluation criteria for the degree of coloration, refractive index, and transparency in the plastic lenses of Examples and Comparative Example are as follows.

### <Degree of coloration of polymerizable composition>

### [Measurement method]

### <Hazen color number (APHA)>

The Hazen color number (APHA) of the polymerizable compositions was measured by the method of JIS K 0071-1:1998.
O: 30 or less
×: greater than 30

### <Refractive index>

The refractive indices of the plastic lenses were measured at 20°C using a KPR-2000 type precision refractometer manufactured by Kalnew Optical Industrial Co., Ltd. for light at the wavelength of the D line (689.6 nm). In one aspect, the refractive index is preferably 1.59 or more and 1.61 or less. Also, in another aspect, the refractive index is preferably 1.62 or more and 1.68 or less, and more preferably 1.65 or more and 1.68 or less.

### <Transparency>

By visually observing the obtained plastic lenses in the dark under fluorescent light, the transparency of the plastic lenses was evaluated using the following three levels. Note that plastic lenses with an evaluation result of VG or G have no practical problem in terms of transparency. On the other hand, plastic lenses with an evaluation result of B are not appropriate for practical use.
VG (Very Good): No cloudiness or opaque material deposition.
G (Good): Slight cloudiness and/or deposition of opaque material observed.
B (Bad): Severe degree of cloudiness or obvious deposition of opaque material.

### (Example 1)

To a 2 L flask, 132.0 g of tolylene diisocyanate (TDI) as the aromatic polyisocyanate, 132.0 g of triallyl isocyanurate (TAIC) having a halogen concentration of 4 ppm as the polyene compound, 6.00 g of 2-(2-hydroxy-4-octyloxyphenyl)-2-H-benzotriazole as the UV absorber, and 0.90 g of butoxyethyl acid phosphate as the internal mold release agent were added and mixed. After they were completely dissolved, 336.0 g of pentaerythritol tetrakis(2-mercaptoacetate) (PETMA) as the polythiol, and 0.12 g of dimethyltin dichloride and 0.06 g of 2,2'-azobis-2,4-dimethylvaleronitrile as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a colorless and transparent polymerizable composition for optical materials of Example 1.

This polymerizable composition for optical materials of Example 1 was injected into a lens mold through a 1.0 µm polytetrafluoroethylene membrane filter, and cast polymerization was carried out for 24 hours in a temperature program from an initial temperature of 25°C to a final temperature of 120°C, thereby fabricating a transparent resin (plastic lens) of Example 1 that was colorless and transparent with a central wall thickness of 1.8 mm. After the obtained plastic lens of Example 1 was released from the molding mold, various measurements and evaluations were carried out. The results are shown in Table 1.

### (Example 2)

To a 2 L flask, 144.0 g of tolylene diisocyanate (TDI) as the aromatic polyisocyanate, 144.0 g of triallyl isocyanurate (TAIC) having a halogen concentration of 6 ppm as the polyene compound, 7.50 g of 2-(2-hydroxy-4-octyloxyphenyl)-2-H-benzotriazole (trade name: SB-707R, Shipro Kasei Kaisha Ltd.) as the UV absorber, and 0.9 g of butoxyethyl acid phosphate as the internal mold release agent were added and mixed. After they were completely dissolved, 312.0 g of bis(mercaptomethyl)-3,6,9-trithiaundecane-1,11-dithiol as the polythiol, and 0.12 g of dimethyltin dichloride and 0.12 g of 2,2'-azobis(isobutyronitrile) as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a colorless and transparent polymerizable composition for optical materials of Example 2, and evaluation for the presence or absence of coloration was carried out. The results are shown in Table 1.

A transparent resin (plastic lens) of Example 2 was fabricated in the same manner as in Example 1 except that the polymerizable composition for optical materials of Example 2 was used instead of the polymerizable composition for optical materials of Example 1. After the obtained plastic lens of Example 2 was released from the molding mold, various measurements and evaluations were carried out. The results are shown in Table 1.

### (Example 3)

To a 2 L flask, 144.0 g of 4,4'-diphenylmethane diisocyanate (MDI) as the aromatic polyisocyanate, 144.0 g of triallyl isocyanurate (TAIC) having a halogen concentration of 5 ppm as the polyene compound, 7.50 g of 2-(2-hydroxy-4-octyloxyphenyl)-2-H-benzotriazole as the UV absorber, and 0.9 g of butoxyethyl acid phosphate as the internal mold release agent were added and mixed. After they were completely dissolved, 312.0 g of pentaerythritol tetrakis(2-mercaptoacetate) (PETMA) as the polythiol, and 0.09 g of dimethyltin dichloride and 0.12 g of 2,2'-azobis(isobutyronitrile) as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a colorless and transparent polymerizable composition for optical materials of Example 3, and evaluation for the presence or absence of coloration was carried out. The results are shown in Table 1.

A transparent resin (plastic lens) of Example 3 was fabricated in the same manner as in Example 1 except that the polymerizable composition for optical materials of Example 3 was used instead of the polymerizable composition for optical materials of Example 1. After the obtained plastic lens of Example 3 was released from the molding mold, various measurements and evaluations were carried out. The results are shown in Table 1.

### (Comparative Example 1)

To a 2 L flask, 132.0 g of tolylene diisocyanate (TDI) as the aromatic polyisocyanate, 132.0 g of triallyl isocyanurate (TAIC) having a halogen concentration of 430 ppm as the polyene compound, 6.00 g of 2-(2-hydroxy-4-octyloxyphenyl)-2-H-benzotriazole as the UV absorber, and 0.9 g of butoxyethyl acid phosphate as the internal mold release agent were added and mixed. After they were completely dissolved, 336.0 g of pentaerythritol tetrakis(2-mercaptoacetate) (PETMA) as the polythiol, and 0.12 g of dimethyltin dichloride and 0.12 g of 2,2'-azobis-2,4-dimethylvaleronitrile as the polymerization catalysts were further added and mixed, and then stirring was continued for 30 minutes under nitrogen purge at 20°C. They were completely dispersed or dissolved to form a homogeneous solution, followed by further decompression to 0.13 kPa (1.0 Torr). Stirring under reduced pressure was carried out as is for 20 minutes, thereby preparing a polymerizable composition for optical materials of Comparative Example 1, which was colored yellow, and evaluation for the presence or absence of coloration was carried out. The results are shown in Table 1.

**[Table 1]**

| | Polymerizable composition | | | | | Lens | |
|---|---|---|---|---|---|---|---|
| | Aromatic polyisocyanate | Polyene compound | Polythiol | Halogen concentration in polyene compound | Degree of coloration | Transparency | Refractive (n) |
| Example 1 | TDI | TAIC | PETMA | 4ppm | ○ | VG | 1.60 |
| Example 2 | TDI | TAIC | Compound 1 | 6ppm | ○ | VG | 1.67 |
| Example 3 | MDI | TAIC | PETMA | 5ppm | ○ | VG | 1.60 |
| Comparative Example 1 | TDI | TAIC | PETMA | 430ppm | × | (Unfabricated) | |

| | | | | | | | |
|---|---|---|---|---|---|---|---|
| * Compound 1: bis(mercaptomethyl)-3,6,9-trithiaundecane-1,11-dithiol | | | | | | | |

In conclusion, each of the aforementioned aspects will be summarized.

According to one aspect, provided is a polymerizable composition for optical materials, the polymerizable composition comprising an aromatic polyisocyanate, a polyene compound having two or more ethylenically unsaturated double bonds and having a halogen concentration of 1 ppm or more and less than 150 ppm, and a polythiol.

According to the above composition, a polymerizable composition for thiourethane-based optical materials with suppressed coloration can be prepared stably with good reproducibility even though an aromatic polyisocyanate and a polyene compound are used, and as a result, a thiourethane-based transparent resin or lens base material with suppressed coloration can be produced stably with good reproducibility.

In one aspect, the above polyene compound can be one or more selected from the group consisting of triallyl isocyanurate and triallyl cyanurate.

In one aspect, the above aromatic polyisocyanate can be one or more selected from the group consisting of tolylene diisocyanate, diphenylmethane diisocyanate, phenylene diisocyanate, and naphthalene diisocyanate.

In one aspect, the above polythiol can be one or more selected from the group consisting of bis(mercaptoethyl) sulfide, trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 4-mercaptomethyl-3,6-dithiaoctane-1,8-dithiol, bis(mercaptomethyl)-3,6,9-trithiaundecane-1,11-dithiol, and 2,5-dimercaptomethyl-1,4-dithiane.

In one aspect, the above polyene compound can have a halogen concentration of 1 ppm or more and less than 100 ppm.

In one aspect, the above halogen concentration can be the chlorine concentration.

In one aspect, the polymerizable composition can further comprise the above polymerization catalyst.

In one aspect, the polymerizable composition can further comprise the above mold release agent.

In one aspect, provided is a method for producing a polymerizable composition for optical materials, comprising: a step of providing an aromatic polyisocyanate, a polyene compound having two or more ethylenically unsaturated double bonds and having a halogen concentration of 1 ppm or more and less than 150 ppm, and a polythiol; and a step of mixing the aromatic polyisocyanate, the polyene compound, and the polythiol.

In one aspect, provided is a method for producing a transparent resin, comprising: a step of providing an aromatic polyisocyanate, a polyene compound having two or more ethylenically unsaturated double bonds and having a halogen concentration of 1 ppm or more and less than 150 ppm, and a polythiol; a step of mixing the aromatic polyisocyanate, the polyene compound, and the polythiol to obtain a polymerizable composition for optical materials; and a step of polymerizing the polymerizable composition for optical materials to obtain a thiourethane-based transparent resin.

In one aspect, provided is a method for producing a lens base material, comprising: a step of providing an aromatic polyisocyanate, a polyene compound having two or more ethylenically unsaturated double bonds and having a halogen concentration of 1 ppm or more and less than 150 ppm, and a polythiol; a step of mixing the aromatic polyisocyanate, the polyene compound, and the polythiol to obtain a polymerizable composition for optical materials; and a step of subjecting the polymerizable composition for optical materials to cast polymerization to obtain a thiourethane-based lens base material.

In one aspect, the above optical members or optical materials can be lenses.

In one aspect, the above lenses can be spectacle lenses or lens base materials.

The embodiments disclosed here should be considered merely illustrative and not restrictive in all respects. The scope of the present invention is presented by the claims rather than the description given above, and it is intended that all modifications within the meaning and scope equivalent to the claims be included. For example, two or more of the various aspects described in the present specification can be combined in an arbitrary combination.

### Industrial Applicability

One aspect of the present invention is useful in the field of production of various optical members such as spectacle lenses and lens base materials.

## Claims

1. A polymerizable composition for optical materials, comprising
an aromatic polyisocyanate, a polyene compound having two or more ethylenically unsaturated double bonds and having a halogen concentration of 1 ppm or more and less than 150 ppm, and a polythiol.

2. The polymerizable composition for optical materials according to claim 1, wherein
the polyene compound comprises one or more selected from the group consisting of triallyl isocyanurate and triallyl cyanurate.

3. The polymerizable composition for optical materials according to claim 1 or 2, wherein
the aromatic polyisocyanate comprises one or more selected from the group consisting of tolylene diisocyanate, diphenylmethane diisocyanate, phenylene diisocyanate, and naphthalene diisocyanate.

4. The polymerizable composition for optical materials according to any one of claims 1 to 3, wherein
the polythiol comprises one or more selected from the group consisting of bis(mercaptoethyl) sulfide, trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 4-mercaptomethyl-3,6-dithiaoctane-1,8-dithiol, bis(mercaptomethyl)-3,6,9-trithiaundecane-1,11-dithiol, and 2,5-dimercaptomethyl-1,4-dithiane.

5. The polymerizable composition for optical materials according to any one of claims 1 to 4, wherein
the polyene compound has a halogen concentration of 1 ppm or more and less than 100 ppm.

6. The polymerizable composition for optical materials according to any one of claims 1 to 5, wherein
the aromatic polyisocyanate has a halogen concentration of less than 30 ppm.

7. The polymerizable composition for optical materials according to any one of claims 1 to 6, wherein
the polythiol has a halogen concentration of less than 30 ppm.

8. The polymerizable composition for optical materials according to any one of claims 1 to 7, wherein
the halogen concentration is a chlorine concentration.

9. The polymerizable composition for optical materials according to any one of claims 1 to 8, further comprising a polymerization catalyst.

10. The polymerizable composition for optical materials according to any one of claims 1 to 9, further comprising a mold release agent.

11. A method for producing a polymerizable composition for optical materials, comprising:
a step of providing an aromatic polyisocyanate, a polyene compound having two or more ethylenically unsaturated double bonds and having a halogen concentration of 1 ppm or more and less than 150 ppm, and a polythiol; and
a step of mixing the aromatic polyisocyanate, the polyene compound, and the polythiol.

12. A method for producing a transparent resin, comprising:
a step of providing an aromatic polyisocyanate, a polyene compound having two or more ethylenically unsaturated double bonds and having a halogen concentration of 1 ppm or more and less than 150 ppm, and a polythiol;
a step of mixing the aromatic polyisocyanate, the polyene compound, and the polythiol to obtain a polymerizable composition for optical materials; and
a step of polymerizing the polymerizable composition for optical materials to obtain a thiourethane-based transparent resin.

13. A method for producing a lens base material, comprising:
a step of providing an aromatic polyisocyanate, a polyene compound having two or more ethylenically unsaturated double bonds and having a halogen concentration of 1 ppm or more and less than 150 ppm, and a polythiol;
a step of mixing the aromatic polyisocyanate, the polyene compound, and the polythiol to obtain a polymerizable composition for optical materials; and
a step of subjecting the polymerizable composition for optical materials to cast polymerization to obtain a thiourethane-based lens base material.
